# EUROPEAN PATENT APPLICATION

(11) **EP 1 923 640 A2**
(43) Date of publication of application: **21.05.2008**
(21) Application number: 07120466.3
(22) Date of filing: 12.11.2007
(51) Int. Cl.: F24F 1/00, F24F 6/14, F24F 5/00

(54) **Humidifying Apparatus and Air Conditioner having the Same**

(30) Priority: 14.11.2006 KR 20060112309
(71) Applicant: Samsung Electronics Co., Ltd., Suwon-si, Gyeonggi-Do (KR)
(72) Inventor: Yun, In-chul, Daewon Cantaville No. 4103-704, Gyeonggi-do (KR); Seo, Kook-jeong, Gwangdo Wideville Apt. No. 101-1304, Gyeonggi-do (KR)
(74) Representative: Grünecker, Kinkeldey, Stockmair & Schwanhäusser Anwaltssozietät

(57) **Abstract**

A humidifying apparatus includes a blowing fan having a plurality of impellers rotating around a rotation axis to generate an air flow, each of the impellers having a humidified fluid discharging part formed to discharge a humidified fluid toward a circumferential surface of the impeller according to a rotation of the impeller and a casing connected with the impellers, and a humidified fluid guiding part formed at a side of the casing and guiding the humidified fluid according to the rotation of the blowing fan.

## Description

### 1. Field of the Invention

Apparatuses consistent with the present invention relate to a humidifying apparatus and an air conditioner having the same, and more particularly to a humidifying apparatus and an air conditioner having the same in which a humidifying structure is improved by supplying humidified fluid.

### 2. Description of the Related Art

Generally, an air-conditioner is an apparatus for cooling and heating a predetermined space within a predetermined range of temperature. The air conditioner is divided into an integrated type and a separated type. The integrated type air conditioner has all components that constitute an air-conditioner in one case, and includes a window type air conditioner and a ceiling type air conditioner.

Generally, the ceiling type air conditioner includes a blowing fan which is operated by a motor and provided in a main body buried in a ceiling, and a heat exchanger which is provided around the blowing fan. However, as indoor air loses humidity and becomes dry during heating or cooling, various humidifying methods have been introduced to maintain an appropriate indoor humidity.

Among these methods, a humidifying method is presented in Korea Patent Publication No. 2004-63660, laid open on July 14, 2004. According to the method, a watering tray and a pump are provided so that condensed water generated by a heat exchanger can be transported by the pump and dropped in the watering tray to perform humidifying.

However, according to the invention of Korean Pat. Pub. No. 2004-63660, the humidified amount varies according to a generated amount of the condensed water, and noise is created by the pump. Also, humidified water may be contaminated because the condensed water is circulated, and water that is dropped is not easily controlled to be uniform.

### SUMMARY OF THE INVENTION

Accordingly, it is an aspect of the present invention to provide a humidifying apparatus and an air conditioner having the same which have a simple constitution and are easy to use.

Another aspect of the present invention is to provide a humidifying apparatus and an air conditioner having the same which are easily applied to conventional equipment.

Additional aspects of the present invention will be set forth in part in the description which follows and, in part, will be apparent from the description, or may be learned by practice of the present invention.

The foregoing and/or other aspects of the present invention can be achieved by providing a humidifying apparatus including a blowing fan including a plurality of impellers rotating around a rotation axis to generate an air flow, each of the impellers having a humidified fluid discharging part formed to discharge a humidified fluid toward a circumferential surface of the impeller according to rotation of the impeller, and a casing connected with the impellers; and a humidified fluid guiding part formed at a side of the casing and guiding the humidified fluid according to a rotation of the blowing fan; where the humidified fluid discharging part communicates with the humidified fluid guiding part.

According to an aspect of the invention, the humidified fluid discharging part includes a communicating part provided at a side thereof and having an opening which communicates with the humidified fluid guiding part, and at least one discharging slot provided at another side thereof and formed in a direction toward the circumferential surface of the impeller to communicate with the communicating part.

According to an aspect of the invention, the humidified fluid guiding part includes a transverse surface provided at a side of the casing in a direction perpendicular to the rotation axis, and at least one vertical guiding member connected to the transverse surface and disposed apart from the rotation axis by a predetermined distance.

According to an aspect of the invention, the vertical guiding member is integrally formed with the transverse surface.

According to an aspect of the invention, an inside portion of each of the impellers is hollow inside.

According to an aspect of the invention, the at least one vertical guiding member includes a first vertical guiding member and a second vertical guiding member, the first and second vertical guiding members being disposed on the transverse surface at different distances from the rotation axis.

According to an aspect of the invention, the first vertical guiding member is disposed nearer to the rotation axis than the second vertical guiding member.

According to an aspect of the invention, a height of the second vertical guiding member from the transverse surface is equal to or larger than a height of the first vertical guiding member from the transverse surface.

According to an aspect of the invention, the second vertical guiding member is disposed concentric with the rotation axis.

According to an aspect of the invention, the second vertical guiding member includes a first section that lies closer to the communicating part and a second section that lies further from the communicating part, the first section of the second vertical guiding member being disposed further from the rotation axis than the second section of the second vertical guiding member.

According to an aspect of the invention, the second vertical guiding member extends from the transverse surface and is bent into a substantially L-shape.

According to an aspect of the invention, the humidifying apparatus further includes a humidified fluid supplying part supplying the humidified fluid to the humidified fluid guiding part.

According to an aspect of the invention, the humidified fluid supplying part includes a supplying pipe supplying and guiding the humidified fluid, and a supply valve opening and closing a flow path of the supplying pipe.

According to an aspect of the invention, the humidifying apparatus further includes a controlling part which controls the supply valve to open and close according to operation and suspension of the blowing fan.

According to an aspect of the invention, the humidified fluid supplying part further includes a supply source supplying the humidified fluid to the supplying pipe, and a fluid reservoir provided between the supply source and the supply valve.

According to an aspect of the invention, the blowing fan includes a centrifugal fan.

The foregoing and/or other aspects of the present invention can be achieved by providing an air conditioner having a humidifying apparatus, the air conditioner including a blowing fan having a plurality of impellers rotating around a rotation axis to generate an air flow, each of the impellers having a humidified fluid discharging part formed to discharge a humidified fluid toward a circumferential surface of the impeller according to a rotation of the impeller, and a casing connected with the impellers; a heat exchanger disposed around the blowing fan, a humidified fluid guiding part formed at a side of the casing and provided to guide the humidified fluid according to a rotation of the blowing fan, where each impeller communicates with the humidified fluid guiding part.

According to an aspect of the invention, the humidified fluid discharging part includes a communicating part provided at a side thereof and having an opening which communicates with the humidified fluid guiding part, and at least one discharging slot provided at another side thereof and formed in a direction toward the circumferential surface of the impeller to communicate with the communicating part.

According to an aspect of the invention, the humidified fluid guiding part includes a transverse surface provided at a side of the casing in a direction perpendicular to the rotation axis, and at least one vertical guiding member connected to the transverse surface and disposed apart from the rotation axis by a predetermined distance.

According to an aspect of the invention, the vertical guiding member is integrally formed with the transverse surface.

According to an aspect of the invention, the at least one vertical guiding member includes a first vertical guiding member and a second vertical guiding member, the first and second vertical guiding members being disposed on the transverse surface at different distances from the rotation axis, the first vertical guiding member being disposed nearer to the rotation axis than the second vertical guiding member.

According to an aspect of the invention, the second vertical guiding member extends from the transverse surface and is bent into a substantially L-shape.

According to an aspect of the invention, the air conditioner further includes a humidified fluid supplying part supplying the humidified fluid to the humidified fluid guiding part.

According to an aspect of the invention, the humidified fluid supplying part includes a supplying pipe supplying and guiding the humidified fluid, and a supply valve opening and closing a flow path of the supplying pipe.

According to an aspect of the invention, the air conditioner further includes a controlling part which controls the supply valve to open and close according to operation and suspension of the blowing fan.

The foregoing and/or other aspects of the present invention are achieved by providing a blowing fan for a humidifying apparatus, including a plurality of impellers rotating about a rotation axis to generate an air flow, each of the impellers having an opening to receive a humidified fluid; a casing connected with the impellers; and a transverse surface provided at a side of the casing in a direction perpendicular to the rotation axis. The humidified fluid is guided by the transverse surface through the opening.

The blowing fan further includes at least one vertical guiding member disposed perpendicular to the transverse surface, the vertical guiding member aiding in guiding the fluid to through the opening. The at least one vertical guiding member includes a first vertical guiding member and a second vertical guiding member distanced further from the rotation axis than the first vertical guiding member. The second vertical guiding member may extend from the transverse surface and be bent into a substantially L-shape. The second vertical guiding member may extend higher from the traverse surface than the first vertical guiding member.

The second vertical guiding member may include a first section that lies closer to the opening and a second section that lies further from the opening, the first section of the second vertical guiding member being disposed further from the rotation axis than the second section of the second vertical guiding member.

The blowing fan further includes a discharging slot formed in a direction toward a circumferential surface of the impeller and discharging the fluid supplied through the opening.

### BRIEF DESCRIPTION OF THE DRAWINGS

The above and/or other aspects of the present invention will become apparent and more readily appreciated from the following description of the embodiments, taken in conjunction with the accompanying drawings, in which:
FIG. 1 is a sectional view of an air conditioner according to the present invention.
FIG. 2 is an expanded plane view of a principal part of the air conditioner of FIG. 1 according to a first embodiment of the present invention.
FIG. 3 is a sectional view of the air conditioner along III-III in FIG. 2 according to the first embodiment of the present invention.
FIG. 4 is a sectional view of a humidified fluid guiding part according to a second embodiment of the present invention along III-III in FIG. 2.
FIG. 5 is a plane view of a humidified fluid guiding part according to a third embodiment of the present invention in FIG. 2.
FIG. 6 is a plane view of the first embodiment of the air conditioner of the present invention showing a process of a flowing of a humidified fluid.
FIG. 7 is a schematic diagram illustrating a control process of the humidified fluid according to the present invention.

### DETAILED DESCRIPTION OF THE PREFERRED EMBODIMENTS

Reference will now be made in detail to the embodiments of the present invention, examples of which are illustrated in the accompanying drawings, wherein like reference numerals refer to like elements throughout. The embodiments are described below so as to explain the present invention by referring to the figures.

An air conditioner is divided into an integrated type, a separated or stand type, a buried type, and other types. Hereinafter, a ceiling type air conditioner which is integrally buried in a ceiling will be described as an exemplary embodiment of the present invention.

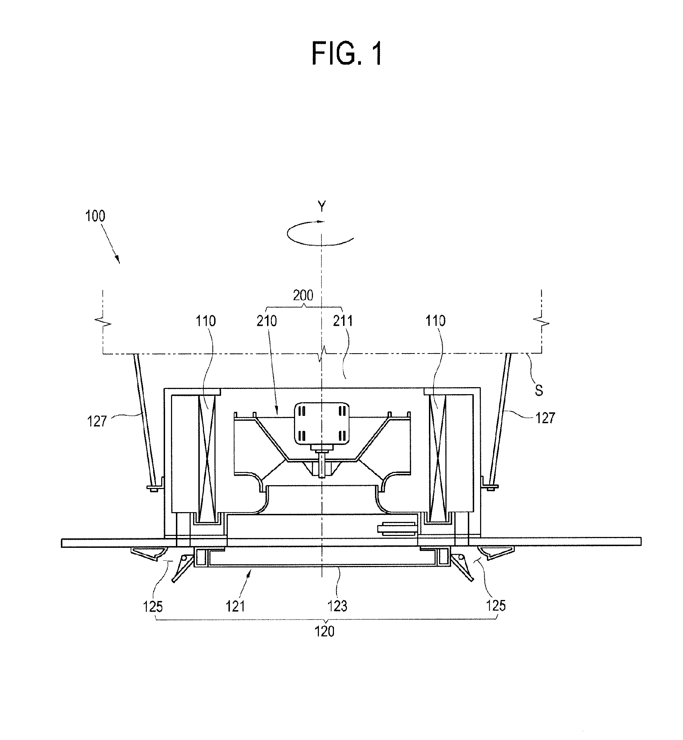

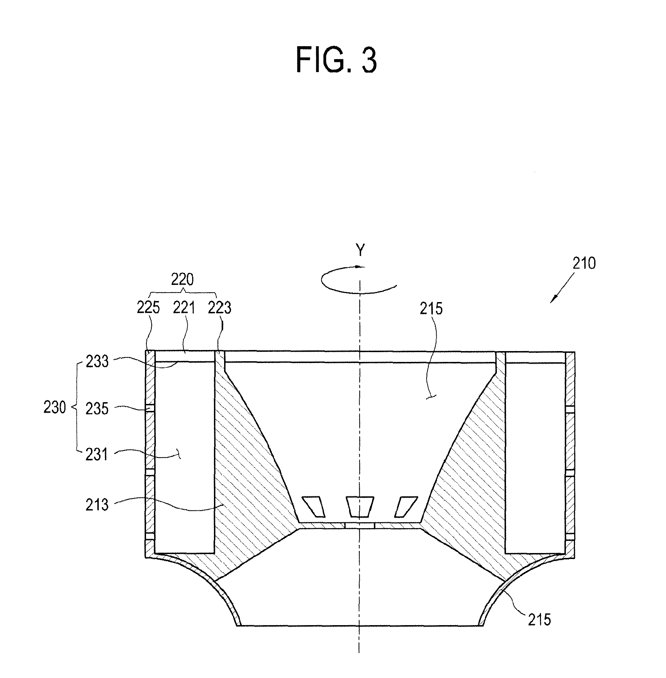

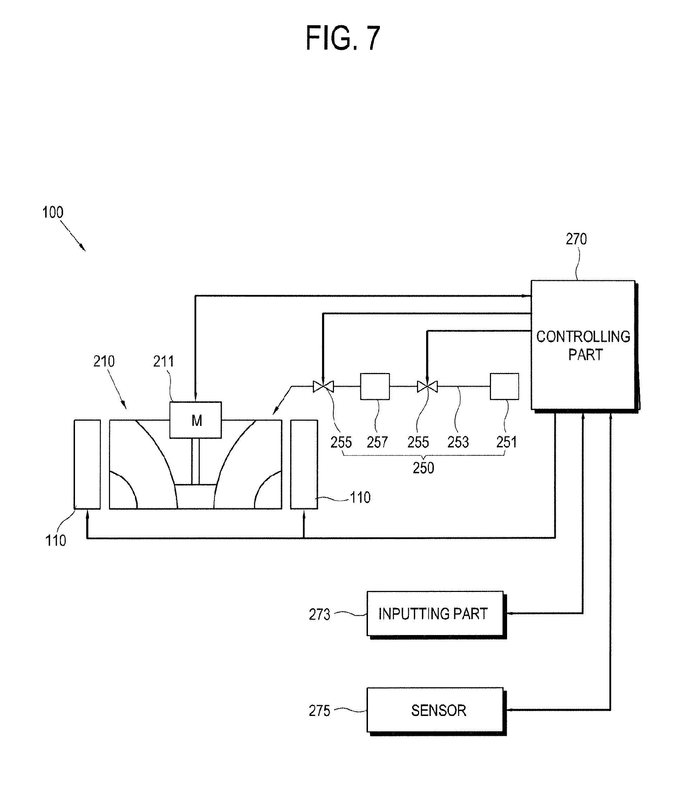

As shown in FIG. 1 to FIG. 5, an air conditioner 100 according to an exemplary embodiment of the present invention includes a humidifying apparatus 200. The air conditioner 100 further includes a main body casing 120 and a heat exchanger 110. The air conditioner 100 may further include a controlling part 270, as shown in FIG. 7.

The main body casing 120 accommodates a blowing fan 210, the heat exchanger 110, and the humidifying apparatus 200. The main body casing 120 is supported to an installing surface S of a ceiling, as shown in FIG. 1, by a supporting member 127 to be buried in the ceiling. The main body casing 120 has, on its lower surface, a front panel 121 having an inlet opening 123 to inhale room air and an outlet opening 125 to exhale the room air. A device that (not shown) adjusts directions of the inhaled and exhaled air may be attached to the inlet opening 123 and the outlet opening 125.

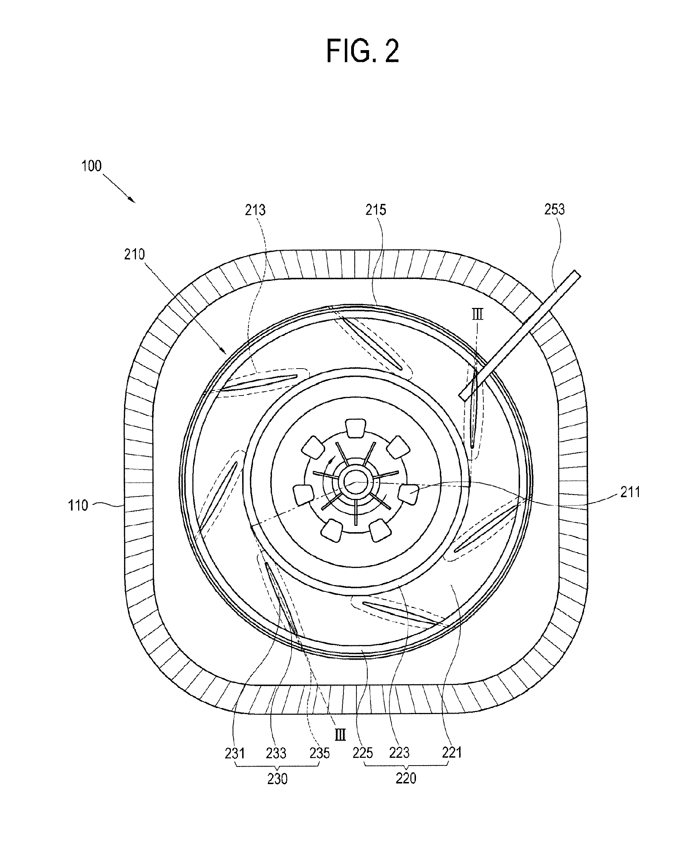

The heat exchanger 110 surrounds the blowing fan 210 along a flow path of the air discharged by the blowing fan 210 so that it can exchange heat with the room air flowed by the blowing fan 210. The heat exchanger 110 may have various shapes for a large area for heat transfer. Therefore, a room temperature may be maintained in a predetermined range of temperature. The heat exchanger 110 does not include a paper, a non-woven fabric, etc., as a humidifying means. Thus, circulating air may be humidified by mixing a humidified fluid which is guided by the heat exchanger 110 and discharged by a communicating part 231, as shown in FIG. 2, with the circulating air passing through an impeller 213.

The humidifying apparatus 200 includes the blowing fan 210, a humidified fluid guiding part 220, and a humidified fluid discharging part 230. The humidifying apparatus 200 further includes a humidified fluid supplying part 250 and the controlling part 270, as shown in FIG. 7.

The blowing fan 210 circulates the room air by rotating around a rotation axis Y. The blowing fan 210 has a motor 211 which provides rotational force and a casing 215 which is connected with the motor 211 to rotate and guide the flow of the room air to form the flow path. The blowing fan 210 further includes the impeller 213 which is provided in the casing 215 and which rotates to generate a flow for inhaling and exhaling the room air through the casing 215. Therefore, the room air is inhaled and exhaled through the main body casing 120 to be circulated by the rotation of the blowing fan 210. The impeller 213 and the casing 215 may be formed by a mold. The blowing fan 210 may further include a centrifugal fan that inhales the room air in a direction of the rotation axis Y and exhales the circulating air in a direction perpendicular to the rotation axis Y.

The impeller 213 has an opening 233 communicating with a transverse surface 221 to provide a flowing force to inhale and exhale the room air, thus circulating the room air through the main body casing 120 by the rotation of the motor 211. The impeller 213 has a bent streamline section to improve the flowing force, and has the communicating part 231 at the center area of the section serving as a hollow space connected with the opening 233. With the hollow space, the impeller 213 can decrease its weight.

The humidified fluid guiding part 220 includes the transverse surface 221 and vertical guiding members 223 and 225 disposed at the transverse surface 221.

The transverse surface 221 is provided to be flat at an upper part of the casing 215 in a direction perpendicular to the rotation axis Y so that the transverse surface 221 can guide the humidified fluid.

The transverse surface 221 has a plurality of openings 233 communicating with the communicating part 231. A pair of vertical guiding members 223 and 225 is disposed on the transverse surface 221 in a direction perpendicular to the transverse surface 221. Therefore, the humidified fluid supplied by the humidified fluid supplying part 250 may be first guided by the transverse surface 221 and then guided to the communicating part 231 by the vertical guiding members 223 and 225.

The vertical guiding members 223 and 225 extend from the transverse surface 221 and are disposed apart from the rotation axis Y by a predetermined distance. The vertical guiding members 223 and 225 may be connected with the transverse surface 221 using a screw, adhesives or any other attachment mechanism known in the art. Therefore, the vertical guiding members 223 and 225 may be easily attached to the conventional blowing fan. Also, as the vertical guiding members 223 and 225 may be formed integrally with the casing 215, the vertical guiding members 223 and 225 can have a simple structure. The vertical guiding members 223 and 225 include a first vertical guiding member 223 and a second vertical guiding member 225. The vertical guiding members 223 and 225 may include the second vertical guiding member 225 only as required, which is because the centrifugal force is generated by the rotation of the blowing fan 210 and the humidified fluid is supplied only if the blowing fan 210 is operated. Preferably, but not necessarily, the vertical guiding members 223 and 225 may have shapes for minimizing their rotation resistances according to the rotation of the casing 215.

The first vertical guiding member 223 is disposed on the transverse surface 221 to be nearer to the rotation axis Y than the second vertical guiding member 225. The communicating part 231 is disposed between the first vertical guiding member 223 and the second vertical guiding member 225. The first vertical guiding member 223 may be disposed concentric with the rotation axis Y. However, the first vertical guiding member 223 may have a shape of a band with different distances from the rotation axis Y as required. Accordingly, the humidified fluid guided by the transverse surface 221 is prevented from flowing in the direction of the rotation axis Y.

The second vertical guiding member 225 is disposed on the transverse surface 221 further from the rotation axis Y than the first vertical guiding member 223. The height of the second vertical guiding member 225 from the transverse surface 221 may be equal to or larger than that of the first vertical guiding member 223.

Accordingly, the humidified fluid guided by the transverse surface 221 may be guided not to the outside of the casing 215 but to the communicating part 231 by the second guiding member 225 having a height larger than that of the first guiding member 223.

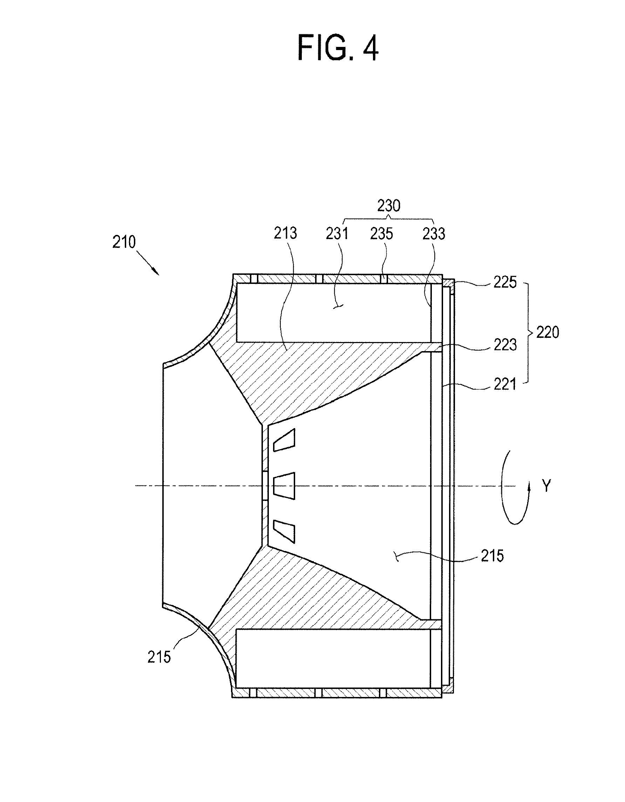

As shown in FIG. 4, an end part of the second vertical guiding member 225 is bent L-shaped toward the rotation axis Y, so that the humidified fluid can be prevented from flowing over the second vertical guiding member 225 by its centrifugal force. Also, if the rotation axis Y is set in a horizontal direction as shown in FIG. 4, the second vertical guiding member 225 which is extending to be bent in the L-shape can prevent the humidified fluid from flowing over the second vertical guiding member 225. Therefore, the humidified fluid can be stably guided to the communicating part 231.

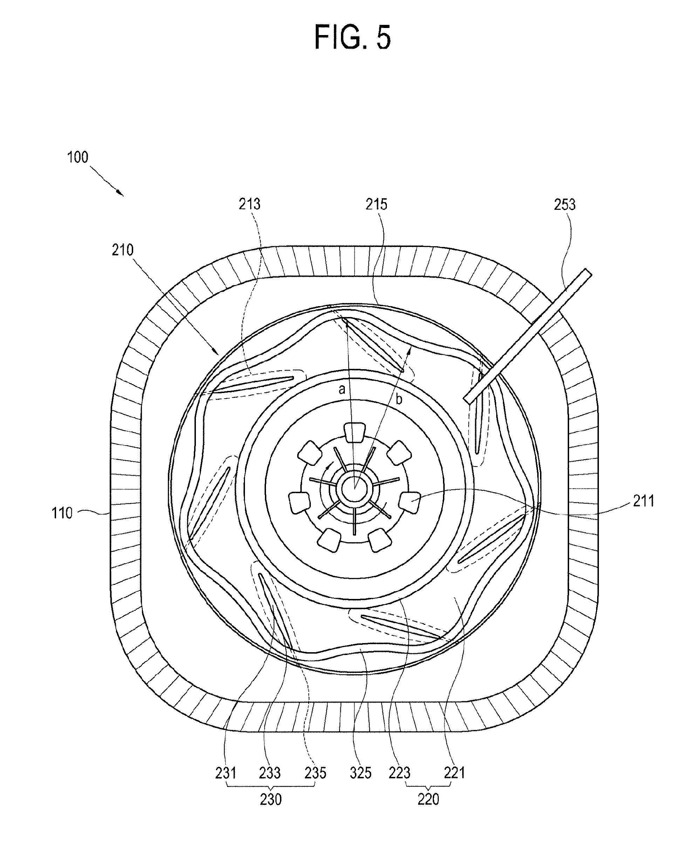

In FIG. 4, the second vertical guiding member 225 is disposed concentric with the rotation axis Y. A second embodiment of the second vertical guiding member 225 is shown in FIG. 5. That is, the second vertical guiding member 325 is provided so that the distance, referred to as "a" in FIG. 5, between the rotation axis Y and a first section of the second vertical guiding member 325 which lies closer to the communicating part 231 is larger than the distance, referred to as "b" in FIG. 5, between the rotation axis Y and a second section of the second vertical guiding member 325. The second vertical guiding member 325 according to the second embodiment of the present invention is also applied to the case of bending and extending of the second vertical guiding member 225 as in FIG. 4. Accordingly, the humidified fluid remaining at the transverse surface 221 may be decreased, so that the humidified fluid can be effectively guided to the humidified fluid discharging part 230.

The second vertical guiding member 225 may have a shape that minimizes the resistance of the second vertical guiding member 225 according to the rotation of the impeller 213. Accordingly, the humidified fluid can be prevented from remaining in the communicating part 231.

Therefore, if the humidified fluid is supplied to the transverse surface 221 between the vertical guiding members 223 and 225, the fluid can be stably guided to the communicating part 231.

The humidified fluid discharging part 230 includes the communicating part 231 having the opening 233, and a discharging slot 235 penetrating from the communicating part 231 toward a circumferential surface of the impeller 213.

The communicating part 231 is a hollow space which communicates with the opening 233 connected with the transverse surface 221, and is formed at a center part of a section of the impeller 213.

At least one discharging slot 235 is provided that outwardly penetrates at each communicating part 231 of the impeller 213 toward the heat exchanger 110. In this case, the size, number, position to be disposed, angle formed from the communicating part 231 toward the outside, and other properties of the discharging slot 235 are determined by considering the size, thickness and revolution speed of the impeller 213, the capacity of the air conditioner 100, etc.. The discharging slot 235 may easily be mounted to the conventional blowing fan.

Thus, if the impeller 213 rotates by being driven by the motor 211, an air stream flowing from the opening 233 of the communicating part 231 to the discharging slot 235 is generated. Therefore, the humidified fluid guided by the transverse surface 221 and the vertical guiding members 223 and 225 passes through the opening 233 and the communicating part 231, in order, and is stably and uniformly discharged by the discharging slot 235. Also, even a small amount of humidified fluid can be discharged without difficulty by the flow stream generated from the communicating part 231 to the heat exchanger 110 that is disposed around the blowing fan 210.

If a supply valve 255, as shown in FIG. 7, is shut and the humidified fluid stops flowing, all the humidified fluid located in the humidified fluid guiding part 220 and the humidified fluid discharging part 230 is discharged to the heat exchanger 110 by the centrifugal force of the blowing fan 210. Therefore, the humidified fluid does not remain in the humidified fluid guiding part 220 and the humidified fluid discharging part 230. Also, because paper, a non-woven fabric, etc. are not additionally used as a humidifying means, fungus and dust, which generate smell and contaminant, are not produced due to remaining moisture.

The humidified fluid supplying part 250 supplies the humidified fluid to the humidified fluid guiding part 220. The humidified fluid supplying part 250 includes a supplying pipe 253 and the supply valve 255. The humidified fluid supplying part 250 further includes a supply source 251 and a fluid reservoir 257.

A controlling part 270 controls the supply of the humidified fluid.

The supplying pipe 253 supplies and guides the humidified fluid from the supply source 251, such as a water supply, to the humidified fluid guiding part 220.

The supply valve 255 and the fluid reservoir 257 are provided in the flow stream of the supplying pipe 253. As shown in FIG. 7, the supply valve 255 may be provided at a part where the humidified fluid is supplied to the fluid reservoir 257 and at an end part which communicates with the fluid reservoir 257, where the humidified fluid is supplied to the transverse surface 221 as required. The end part of the supplying pipe 253 may be disposed at a distance from the humidified fluid guiding part 220 or in contact with the humidified fluid guiding part 220.

The end part of the supplying pipe 253 which supplies the humidified fluid to the transverse surface 221 may be variously disposed as required. For example, the end part of the supplying pipe 253 may come in contact with the vertical guiding members 223 and 225 or the transverse surface 221. Therefore, the humidified fluid supplied by the rotation of the impeller 213 can be prevented from bounding from the transverse surface 221. Also, various devices, such as a cover, may be selectively adopted to prevent the humidified fluid from scattering from the transverse surface 221 by the rotation of the impeller 213.

The supply valve 255 is provided in the flow stream of the supplying pipe 253 to open or close the flow stream.

The operation of the supply valve 255 is controlled by the controlling part 270 on the basis of whether the blowing fan 210 is operated or not. The supply valve 255 includes various automatic valves known in the art, such as an electronic valve which is automatically operated by the control of the controlling part 270. Also, the supply valve 255 may control an amount of the humidified fluid supplied to the humidified fluid guiding part 220.

The fluid reservoir 257 is provided between the supply source 251 and the supply valve 255. At the same time, the fluid reservoir 257 is provided in the flow stream of the supplying pipe 253 to reserve a predetermined amount of humidified fluid. Thus, the humidified fluid can be stably supplied.

The controlling part 270 may control the operations of the heat exchanger 110, the blowing fan 210, the supply valve 255, etc. on the basis of an inputting part 273 or various temperature sensors (not shown). Also, the controlling part 270 may control the supply valve 255 on the basis of the operation and the suspension of the blowing fan 210. That is, the controlling part 270 controls the supply valve 255 to be opened a predetermined time after the blowing fan 210 starts to operate and to be closed a predetermined time before operation of the blowing fan 210 is suspended. Through the inputting part 273, various operation modes of the air conditioner 100, such as operation, suspension, etc. may be selected, as well as setting cooling or heating and setting the temperature according to the cooling or the heating. Also, through the inputting part 273, the operation period of the blowing fan 210 and the time interval between the opening time and the closing time of the supply valve 255 may be inputted. The controlling part 270 may control the supply valve 255 to open and close for the time required for humidifying. Also, the controlling part 270 may control the supplying pipe 253, which supplies the humidified fluid from the supply source 251, to open and close so that the amount of the humidified fluid supplied to the fluid reservoir 257 can be controlled.

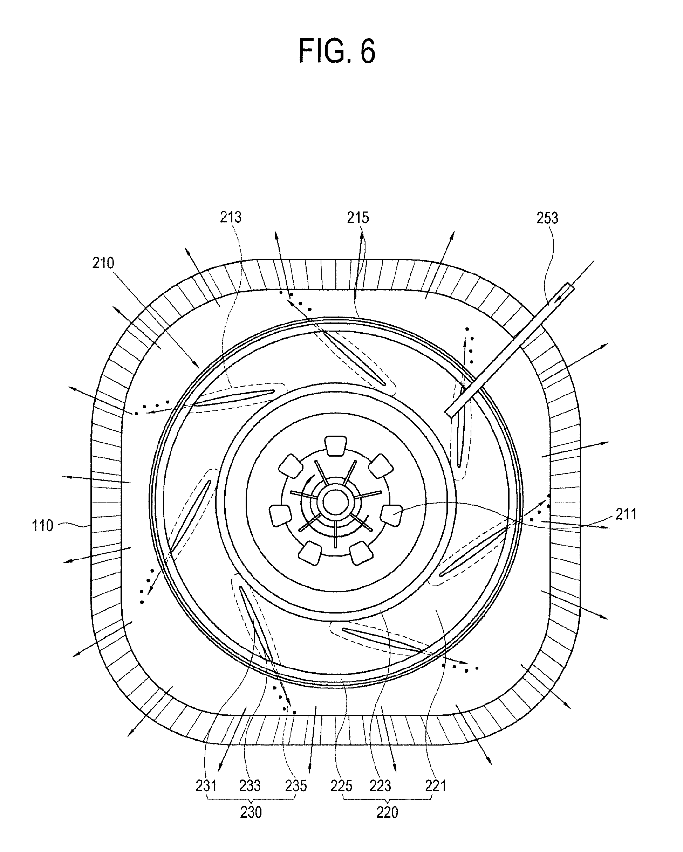

With the above constitution, the operation of the air conditioner 100 according to the present invention is described hereinafter with reference to FIG. 6 and FIG. 7.

First, a user switches on the air conditioner 100 and selects through the inputting part 273 such as an operating button whether to cool or to heat a predetermined room such as an office, a living room, a bedroom, etc., what the cooling/heating temperature is set to, etc. If the user pushes the operating button, the blowing fan 210 rotates and the heat exchanger 110 is heated or cooled according to the condition of the inputting part 273. At the same time, the controlling part 270 opens the supply valve 255 in consideration of the humidity state of the predetermined space. The controlling part 270 may recognize or calculate the humidity state of the cooled/heated space by a sensor 275, such as a wet and dry bulb thermometer or other known hygrometers in the art.

The humidified fluid supplied by the supply source 251 is guided from the end part of the supplying pipe 253 to the transverse surface 221 of the humidified fluid guiding part 220. The humidified fluid guided to the transverse surface 221 moves through the opening 233 of the communicating part 231 by the rotation of the blowing fan 210, and is discharged at the discharging slot 235 to the heat exchanger 110. Therefore, as the humidified fluid supplied by the supply valve 255 is guided and discharged according to the rotation of the blowing fan 210, the humidified fluid can be uniformly and stably supplied throughout the entire surface of the heat exchanger 110. Also, as the humidified fluid does not remain or clump together in its guided and discharged path, an excellent humidifying effect can be achieved using a small amount of the humidified fluid.

The humidified fluid supplied from the supply source 251 may be reserved in the fluid reservoir 257 provided in the flow path of the supplying pipe 253, or may be directly supplied to the humidified fluid guiding part 220 by excluding the fluid reservoir 257. The controlling part 270 controls the supply amount of the humidified fluid, whether to supply the humidified fluid or not, etc. by controlling the supply valve 255 to open or close.

The humidified fluid discharged at the discharging slot 235 bumps against the heat exchanger 110 and becomes minute. Therefore, as the minute humidified fluid can be mixed into the circulating air very easily, a small amount of the humidified fluid can increase the humidifying effect.

According to the present invention, the structure of the humidifying apparatus is simple and requires a minimized number of components to save economic cost. As there is no need to use a humidifying element such as paper, a non-woven fabric, etc., smell and contaminant generated by fungus, dust, etc. which become attached to the humidifying device can be prevented from forming. Also, as the humidified fluid can be uniformly and stably supplied all over to the heat exchanger, a small amount of the humidified fluid can humidify the air to increase the humidifying effect.

Also, as the structure of the humidifying apparatus is simple, the humidifying apparatus can be easily mounted to a conventional air conditioner.

Although a few embodiments of the present invention have been shown and described, it will be appreciated by those skilled in the art that changes may be made in these exemplary embodiments without departing from the principles and spirit of the invention, the scope of which is defined in the appended claims and their equivalents.

## Claims

1. A humidifying apparatus comprising:
a blowing fan comprising:
a plurality of impellers rotating around a rotation axis to generate an air flow, each of the impellers having a humidified fluid discharging part formed to discharge a humidified fluid toward a circumferential surface of the impeller according to rotation of the impeller, and
a casing connected with the impellers; and
a humidified fluid guiding part formed at a side of the casing and guiding the humidified fluid according to a rotation of the blowing fan;
wherein the humidified fluid discharging part communicates with the humidified fluid guiding part.

2. The humidifying apparatus according to claim 1, wherein the humidified fluid discharging part comprises:
a communicating part provided at a side thereof and
having an opening which communicates with the humidified fluid guiding part, and
at least one discharging slot provided at another side thereof and formed in a direction toward the circumferential surface of the impeller to communicate with the communicating part.

3. The humidifying apparatus according to claim 1, wherein the humidified fluid guiding part comprises:
a transverse surface provided at a side of the casing in a direction perpendicular to the rotation axis, and
at least one vertical guiding member connected to the transverse surface and disposed apart from the rotation axis by a predetermined distance.

4. The humidifying apparatus according to claim 3, wherein the vertical guiding member is integrally formed with the transverse surface.

5. The humidifying apparatus according to claim 1, wherein an inside portion of each of the impellers is hollow.

6. The humidifying apparatus according to claim 3, wherein the at least one vertical guiding member comprises a first vertical guiding member and a second vertical guiding member, the first and second vertical guiding members being disposed on the transverse surface at different distances from the rotation axis.

7. The humidifying apparatus according to claim 6, wherein the first vertical guiding member is disposed nearer to the rotation axis than the second vertical guiding member.

8. The humidifying apparatus according to claim 7, wherein a height of the second vertical guiding member from the transverse surface is equal to or larger than a height of the first vertical guiding member from the transverse surface.

9. The humidifying apparatus according to claim 7, wherein the second vertical guiding member is disposed concentric with the rotation axis.

10. The humidifying apparatus according to claim 7, wherein the second vertical guiding member includes a first section that lies closer to the communicating part and a second section that lies further from the communicating part, the first section of the second vertical guiding member being disposed further from the rotation axis than the second section of the second vertical guiding member.

11. The humidifying apparatus according to claim 7, wherein the second vertical guiding member extends from the transverse surface and is bent into a substantially L-shape.

12. The humidifying apparatus according to claim 1, further comprising a humidified fluid supplying part supplying the humidified fluid to the humidified fluid guiding part.

13. The humidifying apparatus according to claim 12, wherein the humidified fluid supplying part comprises:
a supplying pipe supplying and guiding the humidified fluid, and
a supply valve opening and closing a flow path of the supplying pipe.

14. The humidifying apparatus according to claim 13, further comprising a controlling part which controls the supply valve to open and close according to operation and suspension of the blowing fan.

15. The humidifying apparatus according to claim 13, wherein the humidified fluid supplying part further comprises:
a supply source supplying the humidified fluid to the supplying pipe, and
a fluid reservoir provided between the supply source and
the supply valve.

16. The humidifying apparatus according to claim 1, wherein the blowing fan comprises a centrifugal fan.

17. An air conditioner having a humidifying apparatus, the air conditioner comprising:
a blowing fan comprising:
a plurality of impellers rotating around a rotation axis to generate an air flow, each of the impellers having a humidified fluid discharging part formed to discharge a humidified fluid toward a circumferential surface of the impeller according to a rotation of the impeller, and
a casing connected with the impellers;
a heat exchanger disposed around the blowing fan;
a humidified fluid guiding part formed at a side of the casing and provided to guide the humidified fluid according to a rotation of the blowing fan; and
wherein the humidified fluid discharging part communicates with the humidified fluid guiding part.

18. The air conditioner according to claim 17, wherein the humidified fluid discharging part comprises:
a communicating part provided at a side thereof and
having an opening which communicates with the humidified fluid guiding part, and
at least one discharging slot provided at another side thereof and formed in a direction toward the circumferential surface of the impeller to communicate with the communicating part.

19. The air conditioner according to claim 17, wherein the humidified fluid guiding part comprises:
a transverse surface provided at a side of the casing in a direction perpendicular to the rotation axis, and
at least one vertical guiding member connected to the transverse surface and disposed apart from the rotation axis by a predetermined distance.

20. The air conditioner according to claim 19, wherein the vertical guiding member is integrally formed with the transverse surface.

21. The air conditioner according to claim 19 and 20, wherein the at least one vertical guiding member comprises a first vertical guiding member and a second vertical guiding member, the first and second vertical guiding members being disposed on the transverse surface at different distances from the rotation axis, the first vertical guiding member being disposed nearer to the rotation axis than the second vertical guiding member.

22. The air conditioner according to claim 21, wherein the second vertical guiding member extends from the transverse surface and is bent into a substantially L-shape.

23. The air conditioner according to claim 17, further comprising a humidified fluid supplying part supplying the humidified fluid to the humidified fluid guiding part.

24. The air conditioner according to claim 23, wherein the humidified fluid supplying part comprises:
a supplying pipe supplying and guiding the humidified fluid, and
a supply valve opening and closing a flow path of the supplying pipe.

25. The air conditioner according to claim 24, further comprising a controlling part which controls the supply valve to open and close according to operation and suspension of the blowing fan.

26. A blowing fan for a humidifying apparatus, comprising:
a plurality of impellers rotating about a rotation axis to generate an air flow, each of the impellers having an opening to receive a humidified fluid;
a casing connected with the impellers; and
a transverse surface provided at a side of the casing in a direction perpendicular to the rotation axis,
wherein the humidified fluid is guided by the transverse surface through the opening.

27. The blowing fan according to claim 26, further comprising at least one vertical guiding member disposed perpendicular to the transverse surface, the vertical guiding member aiding in guiding the fluid to through the opening.

28. The blowing fan according to claim 27, wherein the at least one vertical guiding member includes a first vertical guiding member and a second vertical guiding member distanced further from the rotation axis than the first vertical guiding member.

29. The blowing fan according to claim 28, wherein the second vertical guiding member extends from the transverse surface and is bent into a substantially L-shape.

30. The blowing fan according to claim 28, wherein the second vertical guiding member extends higher from the traverse surface than the first vertical guiding member.

31. The blowing fan according to claim 28, wherein the second vertical guiding member includes a first section that lies closer to the opening and a second section that lies further from the opening, the first section of the second vertical guiding member being disposed further from the rotation axis than the second section of the second vertical guiding member.

32. The blowing fan according to claim 26, further comprising a discharging slot formed in a direction toward a circumferential surface of the impeller and discharging the fluid supplied through the opening.
